# EUROPEAN PATENT SPECIFICATION

(11) **EP 4 580 899 B1**
(45) Date of publication and mention of the grant of the patent: **07.10.2026**
(21) Application number: 23767822.2
(22) Date of filing: 31.08.2023
(51) Int. Cl.: B60K 6/36, B60K 6/365, B60K 6/387, B60K 6/442, B60K 6/547, B60K 6/445

(54) **POWERTRAIN**
ANTRIEBSSTRANG
GROUPE MOTOPROPULSEUR

(30) Priority: 02.09.2022 NO 20220950
(43) Date of publication of application: 09.07.2025
(73) Proprietor: Brudeli Green Mobility AS, 3302 Hokksund (NO)
(72) Inventor: BJØRKGÅRD, Sven, 3610 Kongsberg (NO); VESTGÅRD, Bård, 3400 Lier (NO); BRUDELI, Geir, 3300 HOKKSUND (NO)
(74) Representative: Acapo Onsagers AS
(86) International application number: PCT/EP2023/073957
(87) International publication number: WO 2024/047192

(56) References cited:
- WO-A1-2020/035558
- WO-A1-2021/073748
- DE-A1- 102018 222 257
- US-A1- 2003 100 395

## Description

### Field of the invention

The present invention relates to a hybrid electric powertrain.

### Background

The present invention provides a new and improved hybrid electric powertrain.

The hybrid electric powertrain comprises two electric motors, power electronics, a transmission assembly, a planetary gear, as well as an internal combustion engine (ICE). The components of the powertrain are commonly combined in a unit powering the vehicle's wheel through a propeller shaft.

The hybrid electric powertrain of the present invention is intended for trucks and large vehicles including long haul trucks covering long yearly distances. The aim of the present invention is to reduce the total cost of ownership of operating those vehicles. Compared to passenger cars such trucks will have at least ten times the weight and driving distance, leading to an energy consumption per year which is much higher, hence an optimized electric powertrain should have the overall energy efficiency as the highest priority. Further the aim of the invention is to offer a novel way of making a hybrid vehicle which is based on an electric vehicle and then to equip this vehicle with a combustion engine operating as a range extender able to provide mechanical torque to the wheels. This will significantly reduce the size of the battery needed, as well as offer flexibility in terms of energy source used to propel the vehicle.

As a result of the high weight of the vehicle a very high drive torque is needed at the wheels to have enough gradeability. On the other hand, a long-haul vehicle spends most of the time at high speeds with moderate wheel torque need. To make this combination in an efficient way, a combination of relatively small electric motors and a transmission that can offer various gear ratios is beneficial. It can be calculated that for application in long-haul vehicles at least 3 gears are required to make sure the electric motors always operate efficiently, and those gears should preferably be shifted without torque interrupt.

Since the combustion engine have a narrower rpm band than a typical electric motor it would be preferable that the combustion engine having more gear ratios available than the electric motor

Further the energy efficiency of the electric drivetrain is of particular importance for the optimal sizing of the batteries. Trucks may have batteries of around 1000 kwh and a 1% efficiency increase can reduce the battery with 10 kwh.

When it comes to using a combustion engine to propel a vehicle the most efficient is to make sure the engine can operate at its most efficient torque and speed. The specific combination of torque and speed may be called an operating point on the torque/speed-map and is typically measured in fuel usage per power unit produced over a time period, typically in grams per kilowatt hour (g/kWh), which also is called specific fuel consumption SFC. Typically, a diesel engine will have SFC-values up to several hundred in the worst operating point down to around 185 at the best operating point.

The aim of the invention is to only use the combustion engine when the SFC is close to optimal, for instance below 190, in all other occasions the vehicle will run with electric, or a combination of electric drive and combustion engine drive if that can ensure a SFC below 190.

A long-haul vehicle is spending a long time driving at steady state cruising speed at around 85-105 km/h, depending on each country's speed regulations. It is the aim of the invention to make sure this can be done with combustion engine coupled directly to the wheel with minimal losses through the transmission and with the combustion engine operating at optimal SFC. Further the power need in such a situation is rather low compared to the power needed for acceleration or driving in steep hills, typically 100-120kW compared to 400-500kW, meaning such a combustion engine can be significantly down-sized.

Since the hybrid electric powertrain as per the invention may be preferably based on an electric vehicle architecture the vehicle would be fully functional without the need for the combustion engine to drive units like servo steering pump, air compressor etc, meaning the combustion engine can be shut off at any time where the SFC is not optimal.

Such hybrid electric vehicle as described above would be able to operate with a significantly reduced battery size, typically 40-50% of a fully electric truck, but still with the possibility to run pure electric when needed and typically up to 80% of the time in electric mode. A pure electric truck on the other hand would need a large battery to be able to cover any variations in the route or driving conditions as well as a safety margin.

Further the invention aims at providing a hybrid electric powertrain which is very short in build length, giving more space in the vehicle to install batteries or other components.

Various prior art solutions for hybrid electric and electric powertrains are known.

EP2978622B1 (SCANIA) discloses a hybrid powertrain with a combustion engine that can be decoupled, 2 electric motors each driving through a planetary gear and a 6-speed transmission through which the power from the combustion engine and the electric motors flow out the output shaft. The electric motors are concentric around the planetary gears dictating rather big and expensive electric motors, and there is in total 7 linear actuators needed to engage the various gear states, which again increases the cost. The final gear step in the gear giving the highest output torque is through a single tooth mesh, meaning the gear needs to be very wide and/or the torque capacity is limited. Further all the gears are installed one after the other without any overlap meaning the overall length is not very short.

WO2021121604A1 (Volvo) discloses an electric axle for trucks featuring two electric motors. Each of the two electric motors may be connected to the driven wheels at two different ratios via a differential. The final torque increase before entering the differential happens over a single tooth mesh, this means this gear needs to be very wide to cope with the torque and have a sufficient lifetime. The two motors are shown installed transversely after each other in the vehicle which may in some applications be difficult to find enough space for. Further, the higher gear requires multiple gear steps leading to decreased power efficiency. Yet another disadvantage is that both motors does not have access to the lowest gear, meaning gradeability is lower than what it could have been.

WO2018156676A2 (Dana) discloses an electric axle featuring two electric motors and a planetary gear. One electric motor is driving the sun gear while the other is driving the ring gear. The carrier is transferring the combined torque from the two motors multiplied with the inherent ratio to the differential. It is further shown a variant of the electric axle having a high gear and a low gear between the electric motors and the planetary gear. A disadvantage of the disclosed solution is that the higher gear requires multiple and same number of gear steps as the lower gears leading to decreased power efficiency, especially for a long-haul vehicle spending a lot of time in higher gears. Yet another disadvantage is that both motors does not have access to the lowest gear, which is the through the sun gear, meaning gradeability is lower than what it could have been. Yet another disadvantage is that the solution with high and low gear is shown with the selectable gears transversely after each other in the vehicle which may in some applications be difficult to find enough space for.

US10384536B2 (Nio) discloses an electric axle featuring two electric motors and a planetary gear. The main function of the planetary gear is to produce the startup torque that is provided by only one of the two motors. The transmission does not provide more than two gears.

DE102011005451, CN 103072472, DE102015206190 disclose electric axles featuring two electric motors. Both electric motors may transfer torque to a wheel axle via four different torque paths, each torque path providing a different gear ratio. The electric axles may shift between the torque paths without loss of torque to the driven wheels, i.e. provides powershift between the 4 gear ratios. The axial length of the electric axles is not configured to fit into a truck, and the higher gear requires multiple gear steps leading to decreased power efficiency. WO2020020441 (Volvo) discloses an electric axle featuring two electric motors and two planetary gears. The electric axle does not provide at least 3 gears to make sure the electric motors always operate efficiently.

Further vehicular powertrains respectively comprising a planetary gear set shiftable between different states, two electric motors and an internal combustion engine are known from WO2021073748 and from WO2020035558.

The prior art hybrid electric and electric powertrains have various disadvantages.

The goal of the present invention is to provide an improved hybrid electric powertrain incorporating an internal combustion engine, in which at least some of the disadvantages of the prior art powertrains are avoided or alleviated.

### Summary of the invention

The present invention is defined by the appended claims and in the following:
In a first aspect, the present invention provides a powertrain according to claim 1.

The first output may be a shaft or gear connected to, or forming an integral part of, the sun gear. In other words, any torque applied to the first output is directly transferred to the sun gear.

The gear sets and clutch assemblies are configured to allow a change between the two gear ratios without torque interruption at the output shaft.

The first output is coupled to the sun gear such that torque provided to the first output may be transferred to the sun gear.

The gear sets and clutch assemblies are configured to allow a change between the two gear ratios without torque interruption at the output shaft.

The carrier is connected to the wheel drive axle to transfer torque between the carrier and the wheel drive axle.

The second gear state may also be defined as a gear state in which the ring gear may rotate, and any rotation is at least controlled by rotation of the sun gear and the carrier.

In other words, the plurality of gear sets, the first clutch assembly and the second clutch assembly provide at least two gear ratios between the first output and each of the first input and the second input.

The plurality of gear sets connecting the first input to the first output may comprise different gear sets than, the same gear sets as, or a duplicate of, the plurality of gear sets connecting the second input to the first output.

The plurality of gear sets connecting the first input to the first output and the plurality of gear sets connecting the second input to the first output may be the same gear sets, different gear sets, or be duplicate gear sets.

Any of the two gear ratios between the first output and the first input may be the same as or different than the two gear ratios between the first output and the second input.

The two gear ratios between the first input and the first output may be identical or different from the two gear ratios between the second input and the first output.

The plurality of gear sets connecting the first input to the first output may be termed a first plurality of gear sets and the plurality of gear sets connecting the second input to the first output may be termed a second plurality of gear sets. The first plurality of gear sets may comprise the same gear sets as the second plurality of gear sets, the first plurality of gear sets may be a duplicate set of gears being identical to the second plurality of gear sets, or the first plurality of gear sets may be different from the second plurality of gear sets.

The first electric motor and the second electric motor may be the same or different depending on desired characteristics and properties of the powertrain.

In an embodiment of the powertrain, the third clutch assembly may be configured to shift between a first position, a second position and a third position, in the first position the input shaft may be connected to the first output via any of the gear sets being selectable by the first clutch assembly or the second clutch assembly, in the second position (i.e. middle position) the input shaft is decoupled from the first output, and in the third position the input shaft is directly connected to the first output and the sun gear.

By having the input shaft connected to the first output via any of the gear sets the input shaft may be connected to the first output and the sun gear via a defined and selectable gear ratio.

In the third position, a rotational speed of the input shaft, i.e. rpm, and the sun gear will be equal, i.e. no gears transferring torque between the input shaft and the sun gear.

In an embodiment of the powertrain, the input shaft may be connected to an input shaft gear set when the third clutch assembly is in the first position, the input shaft gear set is configured to transfer torque between the input shaft and an intermediate shaft, the intermediate shaft coupled to the gear sets being selectable by the first clutch assembly or to the gear sets being selectable by the second clutch assembly.

In an embodiment of the powertrain, the first electric motor and the second electric motor may comprise a first drive shaft and a second drive shaft, respectively, the first and second drive shafts are parallel to, and positioned on opposite sides of, a centreline of the carrier.

In an embodiment, a third drive shaft of the combustion engine is connected to the third input.

In an embodiment of the powertrain, the third drive shaft may be directly connected to the input shaft. In other words, the third drive shaft may be connected such that torque is transferred directly from the third drive shaft to the input shaft without any gears or gearing. The third drive shaft may alternatively be defined as fixed or locked to the input shaft.

In an embodiment of the powertrain, the third drive shaft, the input shaft, the sun gear and the carrier may be coaxial. In other words, the drive shaft, the input shaft, the sun gear and the carrier have a common centreline around which they may rotate.

In an embodiment of the powertrain, the second output may comprise a first gear (i.e. gear wheel) meshing with a second gear (i.e. gear wheel) connected to, or forming an integral part of, the ring gear.

In an embodiment of the powertrain, the transmission assembly may comprise a fourth clutch assembly configured to couple the second output and the second electric motor such that torque and rotation may be transferred from the second electric motor to the ring gear.

In an embodiment, the powertrain may comprise a planetary clutch for controlling a shift between the first gear state, the second gear state and the third gear state.

In an embodiment of the powertrain, a shift between the first gear state, the second gear state and the third gear state can be controlled through torque and speed applied to the sun gear through the first output and to the ring gear through the second output.

In an embodiment of the powertrain, the first electric motor and the second electric motor may be decoupled from the first output by operating the first clutch assembly and the second clutch assembly, respectively.

In an embodiment of the powertrain, the first input may be operably connectable to the sun gear via any of a first torque path and a second torque path, and the second input may be operably connectable to the sun gear via any of a third torque path and a fourth torque path, the first and third torque path providing a first gear ratio, and the second and fourth torque path providing a second gear ratio.

In an embodiment of the powertrain, the second input may be operably connectable to the ring gear via a fifth torque path.

According to the invention, the third input is configured to be connected to the first input by the third clutch assembly while the first clutch assembly is in a middle position, such that the first electric motor is enabled to provide torque to the third input, or the third input is enabled to provide torque to the first input and the first motor, independent of torque or rotation of the second electric motor and of the output shaft.

In the middle position the first clutch assembly is in a neutral state, i.e. it does not connect any of the first and second gear set to the first motor.

In a second aspect, the present invention provides a vehicle comprising a powertrain according to any embodiment of the first aspect.

The term "torque path" is intended to mean a mechanical power transmission configured to transfer torque from a torque input to a torque output.

The first, second and third input may be termed a first, second and third torque input, respectively.

### Description of the drawings

Embodiments of the invention is described in detail by reference to the following drawings:
- Fig. 1: shows a stick diagram of a first exemplary powertrain according to the invention.
- Fig. 2: shows a stick diagram of a second exemplary powertrain not falling within the scope of the invention.
- Figs. 3-10: show perspective and sectional views of the exemplary powertrain illustrated in fig. 1.
- Fig. 11: shows a stick diagram of a third exemplary powertrain not falling within the scope ofthe invention.

### Detailed description of embodiments of the invention

As described above, a hybrid electric powertrain for trucks should preferably have at least three different gear ratios to transfer torque and rotation from the electric motors to the driven wheels.

At least the two highest gear steps (i.e. the gear steps providing the two lowest gear ratios) should have a powershift solution, i.e. a solution where torque can be transferred to the driven wheels while a gear ratio is shifted.

The present invention provides a hybrid electric powertrain, suitable for use in trucks by having two electric motors connected to a planetary gear via a transmission assembly. An internal combustion engine is connected to the transmission assembly. The transmission assembly is configured to provide at least two different gear ratios between the two electric motors (and the internal combustion engine) and a sun gear of the planetary gear. The transmission assembly is configured such that a shift between the two gear ratios may occur without loss of torque.

Transmissions configured to provide at least two different gear ratios without loss of torque are known to the skilled person and disclosed in e.g. DE102011005451, CN 103072472 and DE102015206190.

To obtain the necessary gear ratios between the two electric motors and a wheel drive axle several gear steps are required.

The transmission assembly is required since the two electric motors need more than two gear ratios to provide the maximum mechanical power and efficiency for all combinations of vehicle speed and wheel torque demand.

A final gear step, that is where an output is connected directly, i.e. without further gearing, to the wheel drive axle, will have a very high torque. For use in the final gear step, the planetary gear will have several advantageous properties including a very compact size and especially short axial build length. The planetary gear of the inventive powertrain provides further advantages by being shiftable to run in at least a low-speed gear state and a high-speed gear state, i.e. may provide two different gear ratios between the sun gear and the carrier. In the low-speed gear state, torque is transferred from the sun gear to the carrier via rotating planet gears and a not rotating ring gear to obtain high torque and lower speed at the wheel drive axle. In the high-speed gear state, the sun gear and the carrier are locked relative to each other by for instance locking ring gear to carrier, to provide a 1:1 gear ratio and high speed at the wheel drive axle. Thus, when the planetary gear is in the high-speed gear state, mechanical power loss in this gear step is minimized to increase power efficiency of a vehicle running in the higher gears.

The following disclosure describes exemplary embodiments of an electrically driven powertrain according to the invention. For ease of understanding, the embodiments are illustrated by use of stick diagrams.

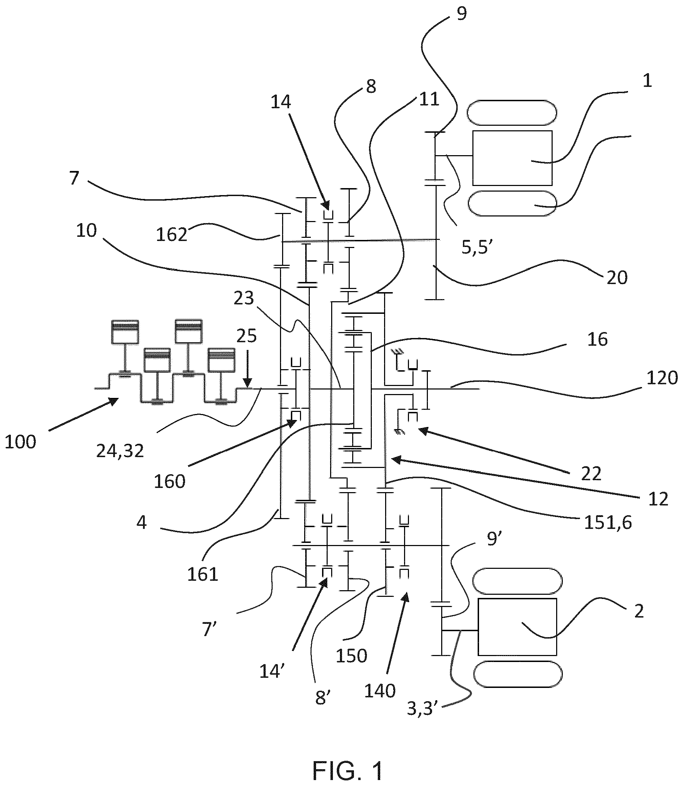

A first exemplary hybrid electric powertrain according to the invention is shown in fig. 1.

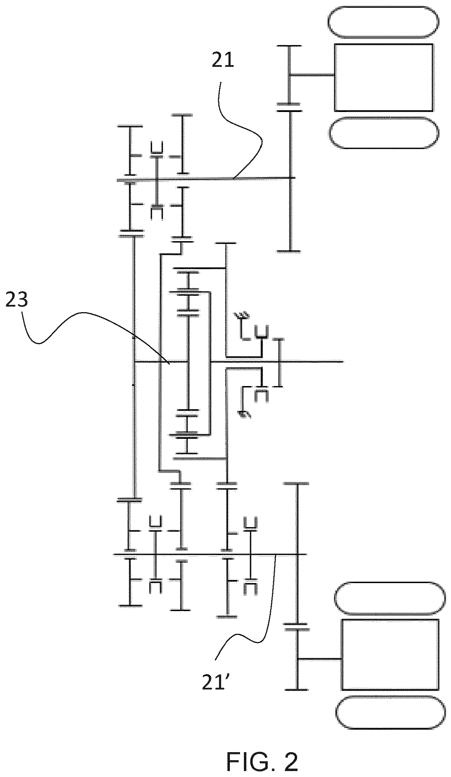

For application outside the scope of the present invention, where a pure electric drive is preferable, e.g. for shorter distances, a variant of the proposed hybrid electric powertrain can be derived where the input section for the combustion engine is taken away, so that only the electric drive is remaining, this is shown in the stick diagram in fig. 2. The advantage of the short build length is even further realized and the modularity with the hybrid powertrain gives an overall benefit for the vehicle builder and fleet operators.

The inventive hybrid electric powertrain features a first electric motor 1, a second electric motor 2, a transmission assembly and a planetary gear 12. The planetary gear comprises a sun gear 4, a ring gear 6 and a carrier 16. The electric motors 1,2 are connected to the sun gear 4 of the planetary gear 12 via the transmission assembly. The transmission assembly has a first gear set 7/7', 10, a second gear set 8/8', 11, a first clutch 14 (i.e. a clutch/shift sleeve assembly) and a second clutch 14' and is configured to achieve sufficient torque at the sun gear 4. The first gear set and the second gear set, in combination with a third gear set 9/9',20/20', provide a first gear ratio and a second gear ratio, respectively, between the electric motors 1,2 and the sun gear 4.

The first electric motor 1, the second electric motor 2 or both may provide torque to the sun gear 4.

Switching between first and second gear ratios may be performed while propulsion torque to the sun gear 4, and consequently the wheel drive axle 19 and the drive wheels 13, is maintained.

The transmission assembly provides two torque paths, i.e. a torque path for each of the gear ratios, between each of the first and second electric motor.

A first torque path connects the first electric motor 1 to the sun gear 4 via the second gear set 8,11 and the first clutch 14. A second torque path connects the first electric motor 1 to the sun gear 4 via the first gear set 7,10 and the first clutch 14. A third torque path connects the second electric motor 2 to the sun gear 4 via the second gear set 8',11 and the second clutch 14'. A fourth torque path connects the second electric motor 2 to the sun gear 4 via the first gear set 7',10 and the second clutch 14'.

The first gear set 7,10 being selectable via the first clutch 14 has a gear wheel 10 in common with the first gear set 7',10 being selectable via the second clutch 14'. The second gear set 8,11 being selectable via the first clutch 14 has a gear wheel 11 in common with the second gear set 8',11 being selectable via the second clutch 14'. The gear wheels 10,11 being in common are connected to the sun gear 4 via an output shaft 23.

The first motor 1 is coupled to the first gear set 7,10 and the second gear set 8,11, being selectable by the first clutch 14, via a first intermediate shaft 21. The second motor 2 is coupled to the first gear set 7',10 and the second gear set 8',11, being selectable by the second clutch 14, via a second intermediate shaft 21'.

The last torque increase occurs in the planetary gear 12. In this manner the last torque increase does not work between shafts in the gearbox housing. The planetary gear 12 is shiftable via a clutch 22 (i.e. a planetary clutch) to provide a third gear ratio for low gearing (i.e. low-speed gear state) and a fourth gear ratio for high gearing (i.e. high-speed gear state) between the sun gear 4 and an output shaft 120. The third gear ratio is commonly between 4:1 and 3:1, and the fourth gear ratio is 1:1.

Consequently, the exemplary powertrain provides a total of four gears for the electric drive, two low-gears and two high-gears. Shifting between each of the two low-gears and each of the two high-gears may be performed without loss of torque to the output shaft 120 and thus the drive wheels of a vehicle, also called powershift. Powershift between the two high-gears is highly advantageous since they are used to the greatest extent. The low-gears are used in less common situations, for example when a vehicle is going up an abnormally steep hill, typically over 10% ascent. Thus, a gear shift without torque interruption between the two high-gears will suffice for most driving situations.

Powershift between the two high-gears (i.e. between the first gear ratio and the second gear ratio when the planetary gear runs in the fourth gear ratio) is done by the following sequence.

The sequence starts with a situation wherein a vehicle drives at a steady speed at the highest gear (i.e. a combination of the second gear ratio in the transmission assembly and the fourth gear ratio in the planetary gear):
- initially, both the first motor 1 and the second motor 2 are connected to the sun gear 4 through the second gear set 8/8',11, both motors provide moderate power;
- a need to shift down to a lower gear occurs, e.g. a hill is approached;
- the first motor 1 reduces power and the second motor 2 increases power accordingly; as the first motor 1 reaches zero torque, the first clutch 14 can be disconnected;
- the first motor 1 adapts its speed to a speed that will fit with the first gear set 7,10; when the speed is correct the first motor 1 is engaged to the first gear set 7,10 by the first clutch 14, torque from the first motor 1 is increased to the level provided before the gear shifting, while the second motor 2 reduces its power;
- when the second motor 2 reaches zero torque, the second gear set 8',11 is disconnected by the second clutch 14';
- the speed of the second motor 2 is adapted to a speed that will fit with the first gear set 7',10; when the speed is correct the second motor 2 is engaged to the first gear set 7',10 by the second clutch 14';
- both motors can return to moderate power.

A substantially reverse sequence may be applied when shifting from the lower of the two high-gears to the highest, i.e. shifting from the first gear set 7/7',10 to the second gear set 8/8', 11.

The same sequences are also used when powershifting between the two low-gears (i.e. shifting between the first gear ratio and the second gear ratio of the transmission assembly when the planetary gear runs in the third gear ratio).

If the vehicle needs a very high propulsion torque, one can select the lowest gear ratio (i.e. the third gear ratio) in the planetary gear 12. The gear ratios of the planetary gear are connected in series with the first gear ratio (of the first gear set 7/7', 10) and the second gear ratio (of the second gear set 8/8',11) so that the ratios multiply. The high gearing in the planetary gear has a ratio of 1:1 while the low gearing is typically between 3 and 4, here we have chosen 3,2:1.

This means that when the high-gear series (a combination of the first or second gear ratio and the fourth gear ratio) is selected there are no gears in the planetary gear that rotate against another gear, i.e. everything rotates together so that friction loss is minimal and the power efficiency is optimal.

When the low-gear series (a combination of the first or second gear ratio and the third gear ratio) is selected, the ring gear 6 is locked to the planetary gear housing, the sun gear 4 is input, and the carrier 16 (also termed planetary carrier or holder) is outgoing.

An advantage of having the last torque increase in the planetary gear 12, where the output (i.e. carrier 16) is connected directly to a wheel drive axle or output shaft is that this very high torque does not work to push shafts in the transmission assembly radially apart. A normal gear tooth engagement in which gears on corresponding shafts engage will, as a consequence of the force of the tooth interaction, create a counter force that tries to push the gears radially apart, thereby trying to bend the shafts on which the gears are fixed. This force must in turn be absorbed by the shaft bearings and is thus also transferred to a housing of the transmission assembly.

In a planetary gear, all these forces are internally balanced; the only forces emitted except for the forces to the wheels are the holding forces of the ring gear. However, the holding forces can be absorbed along the entire perimeter of the ring gear and exerts no forces on the housing.

The powertrain according to the invention provides gear shifts with reduced or even eliminated drive torque interruption, i.e. powershift, by using a transmission assembly based on the simplest forms of gears and shifting mechanisms combined with two electric motors. The transmission assembly is connected by a final gear step in the form of a shiftable planetary gear. The final gear step provides a number of advantages over the prior art by offering two different gear ratios with the most used ratio not having any internal rotation in the final gear step.

The clutches (clutch/shift sleeve assemblies) are mechanical connections for transferring rotation e.g. dog clutches. Such clutches are preferred due to low cost and low maintenance.

However, in alternative embodiments of the powertrain according to the invention other clutches may be used, such as any suitable type of friction clutches, wherein the transfer of torque is done by pushing at least two frictional surfaces against each other. The inventive powertrain may also comprise clutches according to other known clutch principles, such as:
- Friction type clutches combined with centrifugal operation;
- Clutches based on hydraulic principles (i.e. known as torque converter) where one rotating part sets another rotating part in rotation via a fluid (transmission oil);
- Clutches where viscosity in a fluid is changed by heat or magnetic properties for transferring of torque, and
- Any combinations of the above principles.

The inventive powertrain comprises an additional gear set 150,151 so that the second electric motor 2 can transfer torque to the ring gear 6, while the first electric motor 1 may still provide torque to the sun gear 4. The additional torque path may also apply torque at other times as well. For instance, the first motor 1 can drive the sun gear and the second motor 2 can drive the ring gear 6 at various speeds to utilize the the planetary gear 12 as a variator where the carrier 16 speed will be a result of the sun gear 4 speed and ring gear 6 speed and the inherent ratio of the planetary gear 12.

This means that torque may be transferred to the output shaft 120 even while the planetary gear is shifting between high and low gears, or at other times as well. A clutch 140 is selectively engaging the motor to the ring gear 6, this requires that the second clutch 14' is put in a neutral position with no torque transfer to the sun.

A four-speed solution where a powershift of all gears are obtained by a dog clutch that can engage one electric motor and drive the ring gear of the planetary gear while the other electric motor drives the sun gear. When the powershift of the planetary gear is done the ring of the planetary gear is either connected with the none rotating housing to achieve a low gear or with the planet carrier to obtain the planetary gear as one unit directly transferring the torque to the driven wheels in high gear.

When the above-described inventive electric drive is used as a hybrid in conjunction with an internal combustion engine (ICE) 100 a further clutch 160 (i.e. a third clutch/shift sleeve assembly) is provided which can selectively connect the ICE to either a direct connection to the sun gear 4 or to a gear set 161,162 which connects to the intermediate shaft 21 on the torque path from the first electric motor 1. This means that when clutch 160 is connected to the sun gear 4, a direct gear is established between the ICE and the sun gear 4. If the planetary gear 12 is in high gear it is also a direct gear through the planetary, meaning a totally direct torque transfer from the ICE 100 to the output shaft 120.

If the clutch 160 is connected to gears 161,162, then the gear sets 7,10,8,11 and the two selectable gear ratios realized by those gear sets are also made available for the ICE. Hence, a total of six gears are available for the ICE: two gears in the planetary low gear, two gears in the planetary high gear, as well as a direct gear and a direct gear in transmission but with planetary in low gear. In this way the narrower rpm band in the ICE can better be utilized, with 6 gears available versus 4 gears for the electric drive. Now electric drive and combustion engine drive can be combined and the torque coming from the first electric motor 1, the second electric motor 2 or the ICE can be combined to the output shaft 120. This will entail a parallel hybrid mode.

Further hybrid functionality is realized when the first electric motor 1 is coupled to the ICE through the clutch 160 and the first clutch assembly 14 is in a neutral state (i.e. the shift sleeve is in a middle position in which neither of the gear sets 7,8,10,11 are connected to the first motor 1). In this situation the first electric motor 1 may act as a generator charging a battery or even provide electric energy directly to the second electric motor 2, this would be a serial hybrid mode. The first electric motor 1 can also be used as a starter to crank the ICE, while the second electric motor 2 provides torque to propel the vehicle.

Yet another hybrid functionality can be utilized under a braking situation where all three of the first electric motor 1, the second electric motor 2 and the ICE may provide negative torque to slow the vehicle down and as the speed of the vehicle reduces subsequent gears can be shifted at the various torque paths in sequence so that at any time at least one torque path is providing negative torque or in other words brake effort

The inventive powertrain provides a transmission where the electric motors 1,2 through gears 7/7',8/8',9/9', 10, 11,20 are allowed to spin significantly faster than the output shaft 120, hence making it possible to make the electric motors smaller and more cost efficient, while an engine connected to the third input is made to spin either at the same speed as the output shaft 120 or somewhat faster than the output shaft in order to realize the necessary gear ratios by letting the third input 24 utilize the same gears as the first input 5 from the intermediate shaft 21 to the first output 23. In other words, when the engine is connected via the gears on the intermediate shaft 21, the input shaft 32 is spinning at an rpm which is lower than the rpm of the electric motors 1,2, but higher than the rpm of the engine, which is especially beneficial if an ICE is used as the engine.

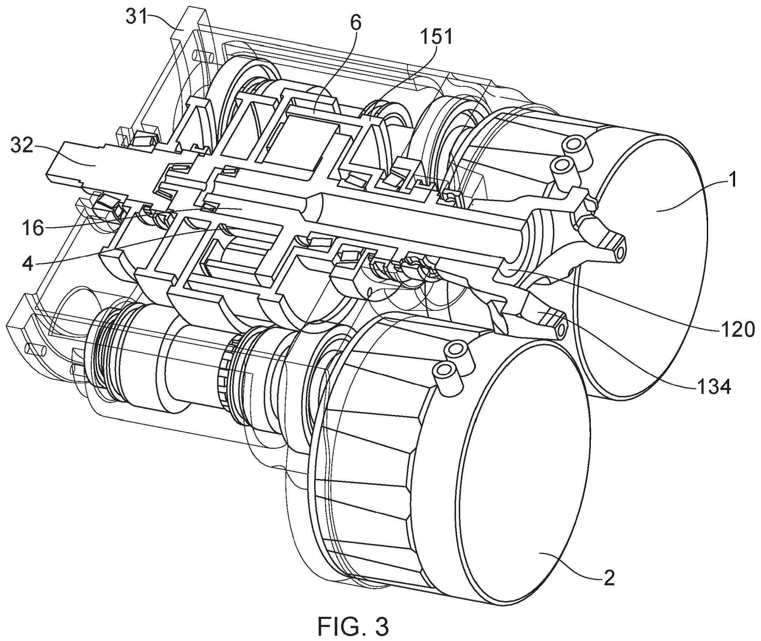

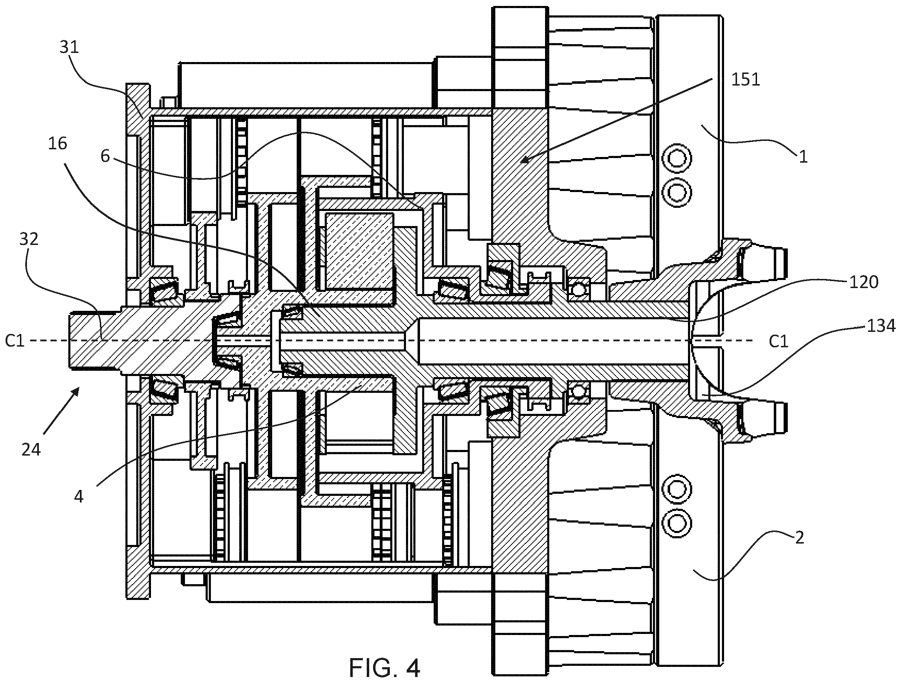

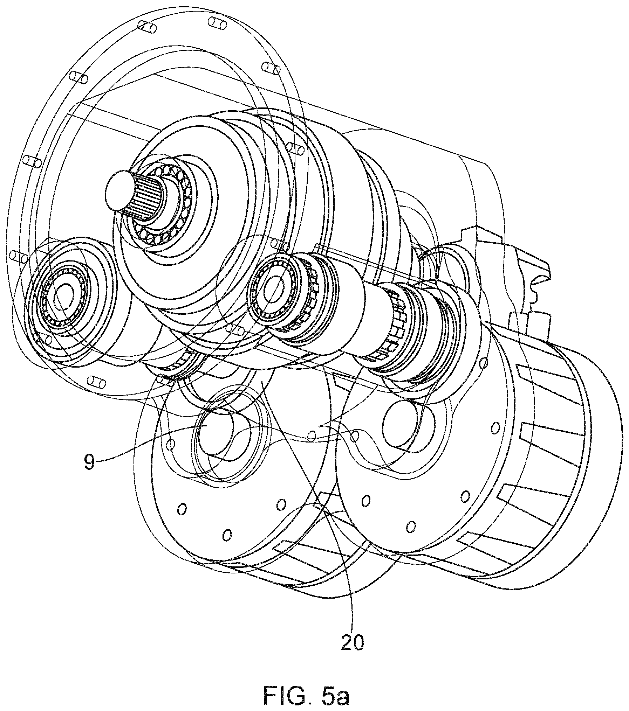

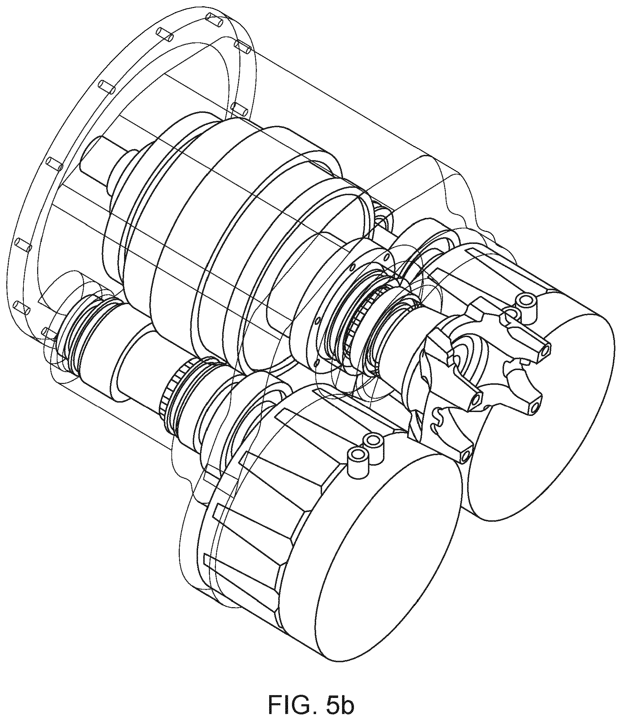

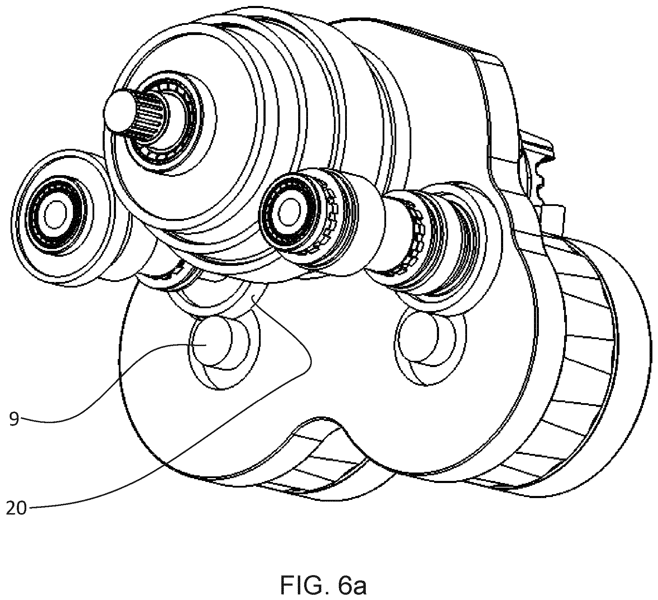

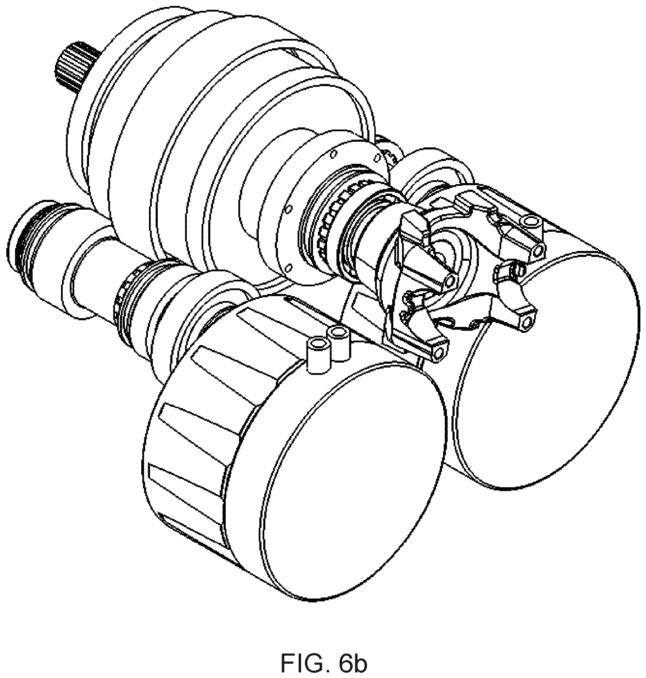

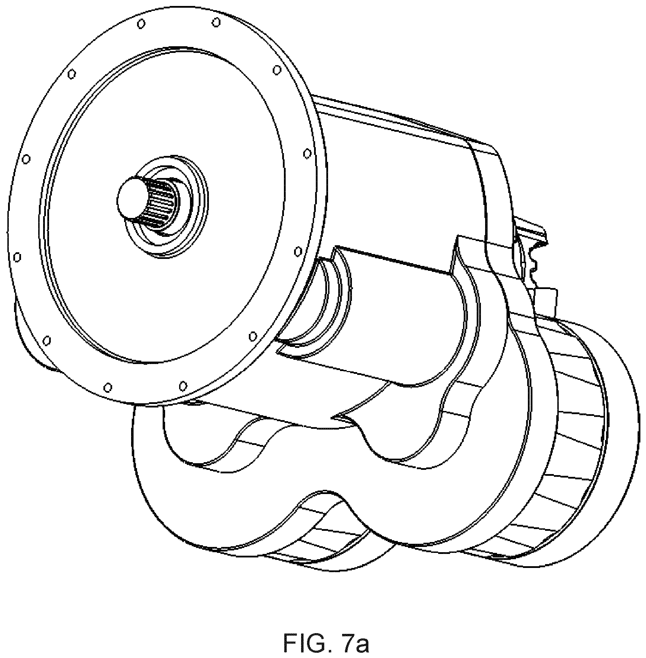

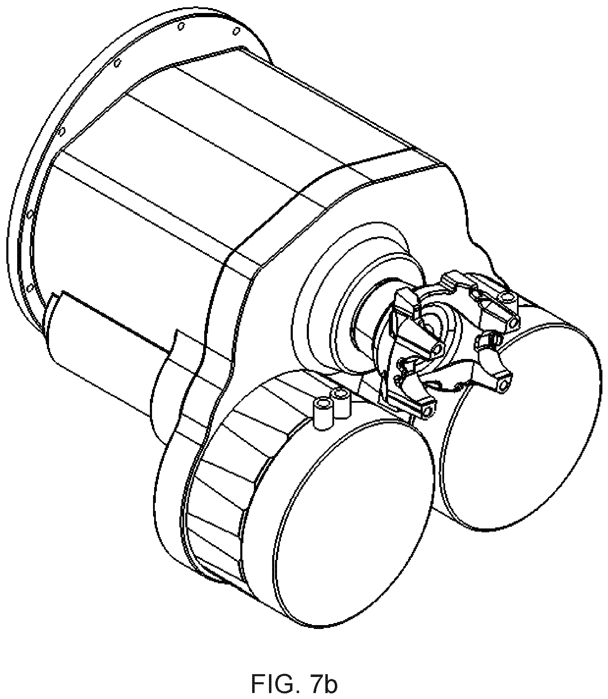

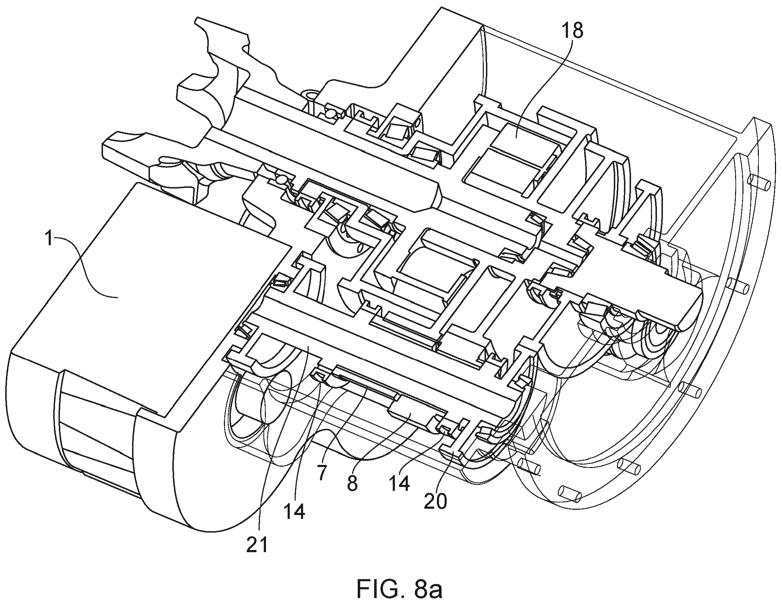

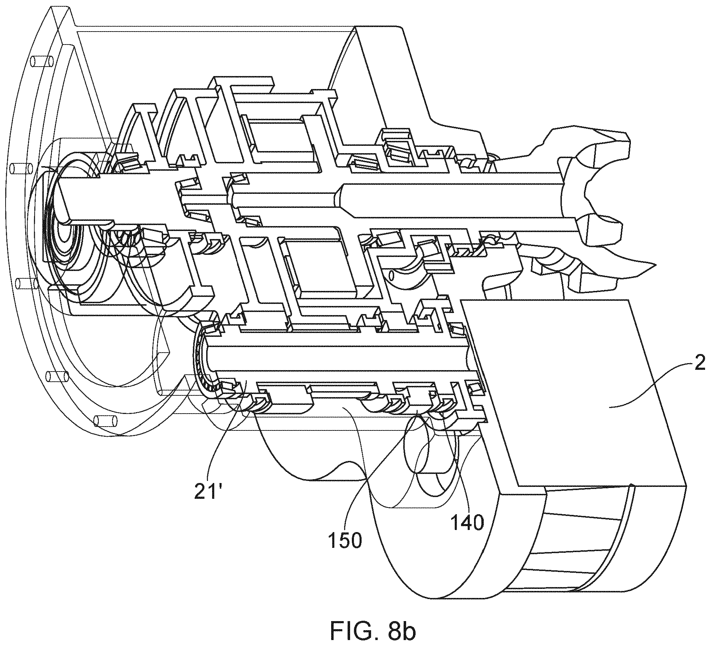

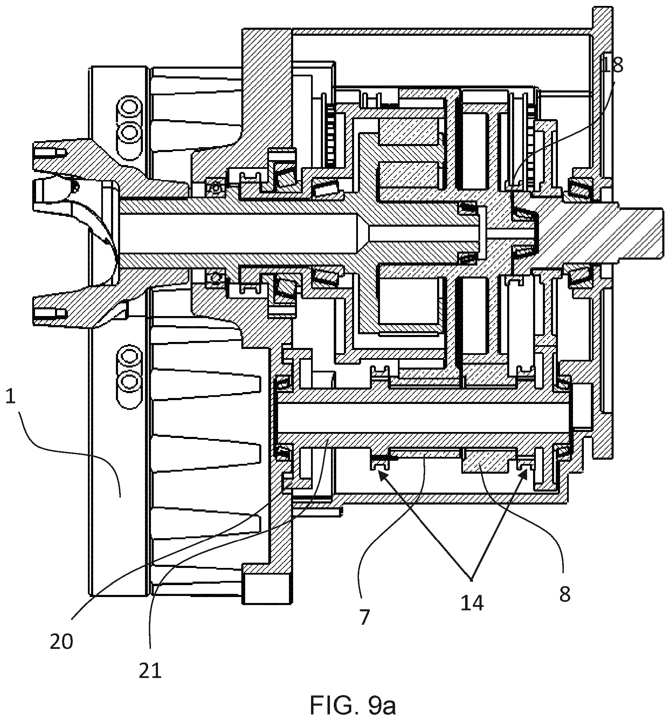

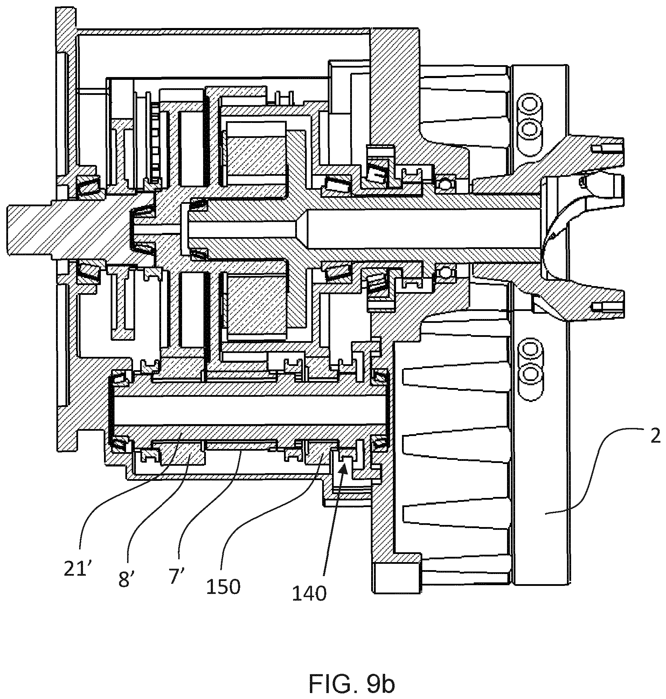

Detailed drawings of the exemplary powertrain in fig. 1 are shown in figs. 3-10 and described below:
The electric powertrain features a housing 31, a first electric motor 1, a second electric motor 2, a transmission assembly, a planetary gear 12, an input shaft 32 and an output shaft 120, see fig. 3.

A first motor pinion gear 9 is coupled to gear 20 which again is firmly connected to a first intermediate shaft 21. A clutch 14 can selectively connect to either of the gears 7 or 8 which are free to rotate on their supporting shafts, note that the clutch 14 is divided on two shift sleeves so as to allow the two gears 7,8 to be installed adjacent to each other in order to save build length, but the two shift sleeves can be moved in unison by a single linear actuator (not shown).

A second motor pinion gear 9' is coupled to gear 20' which again is firmly connected to a second intermediate shaft 21' with clutch 14' and gears 7',8' in the same way as described above.

Each of the first motor 1 and the second motor 2 may be coupled selectively to an intermediate shaft 21 by the clutch 14. The intermediate shaft 21 is arranged to provide torque to the sun gear 4 of a planetary gear 12. The clutch 14 can be moved between 3 positions by a linear actuator, not further described here. In a forward position the clutch 14 locks the first gear 7 to the intermediate shaft 21, in a rearward position the clutch 14 locks the second gear 8 to the intermediate shaft 21. In a neutral mid-position of the clutch 14 none of the first and second gears are connected, and the first electric motor 1 is disconnected from the intermediate shaft.

The sun gear 4 is connected to, or may comprise, an outer gear wheel meshing with the two intermediate shafts 21 and 21'. In addition, the sun gear features an inner gear wheel which meshes with the planet gears 18. The number of planet gears may vary. This specific embodiment has five planet gears, providing five points of torque transfer from sun gear through the planet gears to the carrier 16, as well as five points of contact from the planet gears to the ring gear 6. Such number of contact points means that the gears can be made narrower to save space.

The carrier 16 is both the carrier for the planet gears as well as the carrier for the output shaft 120 and the yoke 134 for a propeller shaft and as such constitutes an integrated and compact design.

The ring gear 6,151 consists of an inner gear meshing with the planets 18 as well as an outer gear meshing with the powersplit gear 150. The motor 2 can be connected through either gear 1 or gear 2 (i.e. the first gear set 7',10 or the second gear set 8',11), the gear shift is in the same way as described for the motor 1. Further the motor 2 can be selectively connected either to any of the gears connected to the sun gear, or to the powersplit gear 150 which is meshed with the ring gear 151 through a clutch 140 (i.e. a fourth clutch/shift sleeve assembly). In this way the second motor 2 may either drive the sun gear 4 with or without the first motor l or it can drive the ring gear.

If both electric motors 1,2 drive the sun gear 4 through gear 1 and the low gear is engaged in the planetary gear, then the maximum drive torque can be realized on the wheels. On the other hand, if the second electric motor 2 is driving the ring gear 6 while the first electric motor 1 is driving the sun gear 4 then the rpms of the sun gear 4 and the ring gear 6 can be controlled independently. This decoupled rpm control is used during a shift between high and low range in the planetary gear 12 since at low range the ring gear 6 should be brought to standstill while at high range it should have same rpm as the sun gear 4.

Since the torque coming from the two motors 1,2 will be summarized onto the carrier 16 it means that the torque going to the wheels can be maintained during a gear shift in the planetary gear.

There could also be different powers coming from the two motors at different rpms, depending on driving situation, hence the term powersplit.

The functionality of shifting the planetary gear between high and low is realized as follows.

The ring gear 6,151 has an outer toothed section coupled to the planetary clutch 22 which again can be selectively connected to a similarly shaped ring section on the outer end of the carrier 16, in which case a direct ratio through the planetary is established, or alternatively the planetary clutch 22 can be connected to a similarly shaped ring section which is firmly bolted to the housing, in which case the ring cannot rotate and a geared ratio is realized between the sun gear 4 and the carrier 16.

The process of shifting gear and the methods to maintain a drive torque to the wheels also during a gear shift will now be explained.

The first electric motor 1 and the second electric motor 2 operates with two different torque paths up until they meet at the sun gear 4,10,11. The gears 10,11 may be connected to the sun gear 4 or be an integral part of the sun gear 4. This means that the torque transferred to the sun gear 4 is a sum of the torque coming from the two motors 1,2. Thus, if the torque from one motor is reduced it can be compensated by a higher torque from the other motor to keep the torque on the sun gear 4 and hence the torque being ultimately sent to the wheels of a vehicle at a more or less constant value.

To help in realizing the above torque filling a certain aspect of typical electrical motors will be utilized. The torque and power being produced by typical electric motors are limited by the capacity of the motor to dissipate heat coming from the inherent losses in the motor. The produced heat is a result of power produced and the efficiency of the motor to produce that power, as well as the duration of power. To stay under the heat dissipation capacity threshold, a lower power may be produced for a longer time, or a higher power may be produced for a shorter time. During driving a lower power therefore needs to be set, for instance 70% of nominal power, while for a short period (1-2 seconds), e.g. during gear shift, a boosted power greater than 100% of nominal power may be used. A typical boost power level may lay within the range 140% to more than 200% depending on several factors which are beyond the scope of this text.

A shift sequence will then be as follows when shift from 1. gear to 2. gear during an acceleration phase of the vehicle.
- The electric motor 1 and the electric motor rear 2 are both connected to the sun gear through gears 7 and 10 (1. gear). Torque/power is about 70% of nominal and vehicle is accelerating and motor rpm is constantly increasing.
- At a defined speed/motor rpm a shift sequence will be initiated by the controller where one motor power will be reduced to zero while the other motor will be increased to for instance 140%.
- The torque path with the motor at zero power will shift gear from 1 to 2, this includes changing the motor rpm to match the related rpm for the gear 2.
- When torque path is established for gear 2 then power can again be applied from that motor, while again reducing the power on the other motor. Indeed, the power on the motor connected through the torque path at gear 1 can be reduced all the way down to zero, while the motor connected to the torque path already on gear 2 can be brought up to 140%.
- Now the other torque path can also be shifted from gear 1 to gear 2.
- When both torque paths are in gear 2 power can again be set at 70% from each motor.

As described above a gear shift from 1 to 2 can be realized with maintained torque on the wheels. Although here described that the torque through the gear shift is kept at same level it does not have to be, it can be set to vary through the gear shift depending on the dynamics of the system and it will be optimized based on tuning of the actual system as a whole. This again is made possible by the fact that we have two independent torque paths which can be individually controlled.

As for the planetary gear which is coupled in series and after the above explained transmission it does not have separate torque paths, but it acts as a summary device of the two torque paths upstream. The two gears in the planetary have a rather big difference in ratio and will be called high and low as they act as a range gear. To calculate the total ratio of the e-axle the ratio realized by gear 1 and 2 would need to be multiplied with the ratio in the range gear, giving in total 4 different gears, with 2 gears in the low range and 2 gears in high range.

The exemplary powertrain is configured to allow powershift between the high and low gear of the planetary gear. The steps for performing such a powershift is described further below. However, the powertrain may also perform a simple gear shift between the high and low gear without powershift similar to a shift performed by the embodiments wherein the second electric motor is only coupled to the sun gear.

Firstly a simple gear shift of the range gear during an acceleration phase of the vehicle will be explained.
- At 2.gear low the ring gear is stationary while the sun is moving at high rpm and carrier and hence wheels are moving at relatively low rpm/low speed. This rpm difference is based on the planetary gear ratio.
- When a certain speed/motor rpm is reached on 2. gear low range a shift sequence is initiated by the controller to shift into 1. gear high range. This could also be called a shift from second gear to third gear, if such a nomenclature is chosen.
- Both motors are set to zero torque/power, the clutch 22 will move from an inner position where it locks the ring gear to the housing and into a mid-position where the ring gear is free to rotate.
- Next motors rpm will be reduced, since carrier rpm is linked to wheel rpm and as such is more or less constant during the gear shift sequence the ring gear would have start to rotate as a result of the reduced rpm of the sun gear.
- As the next gear in the upshift sequence is 1. gear high range the gears in the upstream transmission would have to be shifted into 1. gear, it can be done simultaneously on both torque paths or in sequence as long as the rpms are matched with the gears to be connected.
- At a certain rpm of the sun gear/certain rpm of motors the ring gear would have a speed which is equal to the sun gear, at this point in time the clutch 22 will move from the mid-position to the outer position where it locks the ring gear to the sun gear, hence locking the planetary gear to rotate as one unit in a 1:1 ratio.
- Now the upstream transmission is in 1.gear and the range gear is in high, i.e. 1. gear high range, or third gear in that nomenclature.

Above simple shift process entails a shift with a torque interrupt.

In the following a shift sequence utilizing another feature of the invention will be explained, which will enable a shift sequence with maintained torque during shifting.
- In the second gear of the e-axle both motors 1,2 run via the second gears 10,10' and the low gear of the planetary gear 12. The ring gear 6 is stationary while the sun gear 4 moves at high rpm. The carrier 16 and thus the wheels 13 are moving at relatively low rpm/low speed. This rpm difference is based on the planetary gear ratio.
- When a certain speed/motor rpm is reached, a shift sequence is initiated by a controller to shift into the third gear of the e-axle.
- The electric motor 2 is set to zero power, while the electric motor 1 is set to 140% boost power. Torque to the wheels is thus maintained.
- The clutch 140 is moved from an inner position where it connects the intermediate shaft 23' to the hollow shaft 23a, and hence the sun gear 4, and to a mid-position where the front motor 2 is decoupled from the planetary gear.
- When the electric motor 2 is brought to more or less standstill, the clutch 140 is moved from a mid-position to an outer position where it connects the intermediate shaft 23' to the powersplit gear 112 to mesh with the stationary ring gear 6.
- The torque path connected to the electric motor 2 is now shifted from the second gear 10' to the first gear 11', this is preferably done by a slight rotation of the motor in order for the teeth of the shift sleeve assembly 101 to find its corresponding slot in the adjacent part.
- The torque of the electric motor 2 is increased to equal the holding torque of the ring gear 6, resulting in the remaining torque between the clutch 22 and the stationary teeth in the housing will be close to zero and the clutch 22 can move from an inner position where it locks the ring gear 6 to the housing and into a mid-position where the ring gear 6 is free to rotate controlled by the rotation of the sun gear and the carrier.
- The rpm of the ring gear 6 is gradually increased while the rpm of the rear motor 1 is gradually reduced, maintaining the rpm of the carrier 16 (carrier rpm is governed by wheel speed).
- The planetary gear 12 is in a state of powersplit where the power going into the planetary gear is split between the two motors 1,2 and the sum of power is carried out by the carrier 16.
- At a certain rpm of the sun gear 4 and/or the motors, the ring gear 6 will have a speed which is equal to the sun gear 4, at this point in time the clutch 22 will move from the mid-position to the outer position where it locks the ring gear 6 to the sun gear 4, hence locking the planetary gear 12 to rotate as one unit in a 1:1 ratio.
- The power of the electric motor 2 is increased to a boost power of 140% while the rear motor 1 is reduced to zero power. Torque to the wheels is thus maintained.
- The torque path connected to the electric motor 1 is now shifted from the second gear 10 to the first gear 11 by adapting the rpm of the motor so that it fits gear 11.
- The upstream transmission assembly are now connected with motor 1 to the sun gear 4 via the first gear and with motor 2 to the ring gear 6 via the first gear and the planetary gear 12 is in the high gear, i.e. the third gear of the e-axle.
- Both electric motors 1,2 can be set to for instance 70% power, or whatever power is required by the driving situation.

The above gear shift sequence may be seen as providing a shift from the second gear to the third gear of the e-axle if such a nomenclature is chosen

Likewise, a shift from the third gear to the second gear of the electric drive during for instance an uphill downshift is described using the powershift feature where the following shift sequence may be used, starting from the end state as described directly above:
- In the third gear of the electric drive both motors 1,2 run at 70% power via the first gears 8,8' and the high gear of the planetary gear 12. The ring gear 6 is locked to rotate with the same speed as the sun gear in a direct 1:1 ratio, vehicle speed is gradually reducing due to the steep incline.
- When a certain speed/motor rpm is reached, a shift sequence is initiated by a controller to shift into the second gear of the e-axle.
- The torque of the electric motor 1 is set to 0 and the torque of the electric motor 2 is set to 140% boost torque
- The torque path connected to electric motor 1 is shifted from first gear to second gear
- Torque on the electric motor 1 is re-established to a relatively high level
- The torque of the electric motor 2 is balanced to equal the torque from electric motor 1 as seen at the planetary gear clutch 22 teeth, taking into account the ratios between the gears 7/10, gears 9/20 and the gears 111/112, so that zero torque is seen at the planetary gear clutch 22 teeth
- Now the clutch 22 will move from the outer position to the mid- position where the ring gear 6 may rotate at a different speed than the carrier 16.
- The rpm of the ring gear 6 is gradually reduced while the rpm of the rear motor 1 is gradually increased by applying the relevant torque from the two motors, maintaining the rpm of the carrier 16 (carrier rpm is governed by wheel speed).
- The planetary gear 12 is in a state of powersplit where the power going into the planetary gear is split between the two motors 1,2 and the sum of power is carried out by the carrier 16
- At a certain rpm of the sun gear 4 the ring gear 6 will have a speed which is zero or in other words at standstill, at this point in time the clutch 22 will move from the mid-position to the inner position where it locks the ring gear 6 to the housing, hence locking the ring gear 6 to be stationary.
- Electric motor 1 is set to 140% boost torque, while front motor 2 is set to 0 torque
- The torque path connected to electric motor 2 is shifted from first gear to second gear, this is preferably done by a slight rotation of the motor in order for the teeth of the shift sleeve assembly 101 to find its corresponding slot in the adjacent part
- The clutch 140 is moved from an outer position where it connects the intermediate shaft 23' to the powershift gear 112, and hence the ring gear 6, and to a mid-position where the front motor 2 is decoupled from the planetary gear.
- Speed of the electric motor 2 is increased until speed of the intermediate shaft 23' more or less matches the speed of the hollow shaft 23a or in other words gear 20, the clutch 140 is moved from a mid-position to an inner position where it connects the intermediate shaft 23' to hollow shaft 23a or in other words gear 20 and hence to the sun gear 4.
- Now both motors drive the sun through second gear in the transmission while the planetary is in the low gear range
- Both electric motors 1,2 can be set to for instance 70% power, or whatever power is required by the driving situation.

The above gear shift sequence may be seen as providing a shift from the third gear to the second gear of the e-axle if such a nomenclature is chosen

The methods above describe shifting between different gears in a system with 2 gearboxes coupled in series with each other by operating a plurality of clutches of the mechanical type between different states, and where the shift from one state to another is relying on control of the rpm and torque over the clutches. To make sure that this is done in a controlled way every shift of clutch state is done at a situation where one side of the clutch is coupled to the wheel and the other side coupled to the motor. In other words, the method makes sure that only one clutch in a torque path may be opened at the same time. Further a rpm difference over the clutches is set to make sure that the teeth engagement does not being prevented by two teeth butting against each other, but that the teeth slide into an opening in the adjacent part of the clutch, to this effect a rpm difference of around 10 rpm is set.

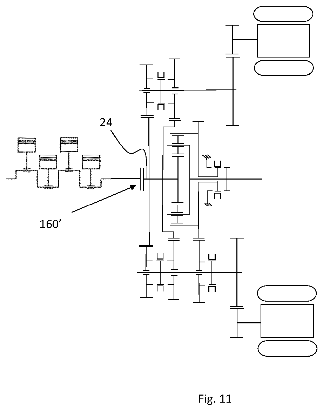

An exemplary powertrain not falling within the scope of the invention is shown in fig. 11 where the gears 161,162 is taken away and the clutch 160 has been replaced by a clutch 160' which is not a 3-position clutch, but it can connect or not connect the engine to the third input 24. The clutch 160' may be a friction clutch, a dog clutch, or any other type of clutch capable of transferring the necessary torque. In this embodiment the power source at the third input 24 will only have access to two fixed gears, from the planetary gear, but it will also have access to the ratio variator being formed by the torque and speed control coming from the individual drive of the sun gear 4 and the ring gear 6 by motor 1 and motor 2 respectively.

Further the illustrated layouts comprise a plurality of rolling bearings placed and sized to accommodate the different rpms at different places and the forces acting there. The type of bearing, number of bearings and their placement may be changed or modified. Further there is a need to install various sealings around rotating shafts etc, these are not shown for clarity as they do not impact the innovative features.

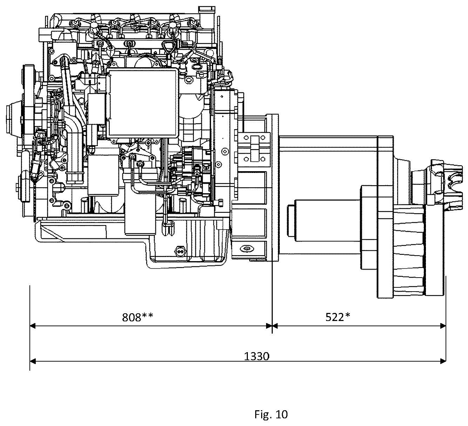

Fig. 10 shows the new innovative hybrid transmission with integrated electric motors assembled together with a combustion engine. The length of the transmission is around 520mm, which is 400-450mm shorter than a typical heavy duty truck transmission with electric motors, with electric motors a typical transmission would be even some 2-300mm longer. So, a significant build length reduction is shown.

Also, since the strategy with using an electric vehicle as base and using the combustion engine primarily as a range extender a much smaller and shorter engine can be used, here shown at 808mm, which is some 400-500mm shorter than a typical heavy-duty engine in the 13-15L size.

There are a lot of different technologies for electric motors that are used for propulsion of electric vehicles. The inventive powertrain may use any of these commonly known electric motor technologies, i.e. any of DC Series Motors, Brushless DC Motors, Permanent Magnet Synchronous Motors (PMSM), Three Phase AC Induction Motors and Switched Reluctance Motors (SRM). The various types of electric motors may have different performance characteristics. By use of the inventive powertrain, an optimal combination of electric motors may be applied. For instance, some electric motor principles are known to have a very low torque at zero rotational speed, but with other favourable characteristics, such as high efficiency during operation.

## Claims

1. A powertrain comprising a first electric motor (1), a second electric motor (2), a transmission assembly, a planetary gear (12) and an output shaft (120),
wherein
the transmission assembly comprises a first input (5) connected to the first electric motor (1), a second input (3) connected to the second electric motor, a third input (24) connectable to a combustion engine (100), at least a first output (23) to which the first electric motor (1) and the second electric motor (2) are configured to provide torque, and a second output (150) connectable to the second electric motor (2), the second output being coupled to the ring gear (6), wherein
the first input (5) is connectable to the first output (23) by a plurality of gear sets (7,10,8,11) being selectable by a first clutch assembly (14), and
the second input (3) is connectable to the first output (23) by a plurality of gear sets (7',10,8',11) being selectable by a second clutch assembly (14'), to provide at least two gear ratios between the first output (23) and each of the first input (5) and the second input (3), wherein the gear sets and clutch assemblies are configured to allow a change between the two gear ratios without torque interrupt; and
the planetary gear (12) comprises a sun gear (4), a ring gear (6) and a carrier (16), the carrier (16) is connected to the output shaft (120) and the planetary gear (12) is shiftable between a first gear state, a second gear state and a third gear state, in the first gear state the ring gear (6) is kept rotationally stationary to provide a highest possible inherent gear ratio between the carrier (16) and the sun gear (4), in the second gear state a rotational speed of the ring gear (6) depends on the rotation of both the sun gear (4) and the carrier (16), and in the third gear state any two of the ring gear (6), the sun gear (4) and the carrier are kept rotationally constant to each other to provide a 1:1 gear ratio between the sun gear (4) and the carrier (16);
the first output (23) of the transmission assembly is coupled to the sun gear (4);
the third input (24) comprises an input shaft (32) coupled to the first output (23) and the sun gear (4) via a third clutch assembly (160,160'), the third input (24) is configured to be connected to the first input (5) by the third clutch assembly (160) while the first clutch assembly (14) is in a middle position, such that the first electric motor (1) is enabled to provide torque to the third input (24), or the third input (24) is enabled to provide torque to the first input (5) and the first motor (1), independent of torque or rotation of the second electric motor (2) and of the output shaft (120).

2. A powertrain according to claim 1, wherein the third clutch assembly (160) is configured to shift between a first position, a second position and a third position, in the first position the input shaft (32) is connected to the first output (23) via any of the gear sets (7,10,8,11) being selectable by the first clutch assembly (14) or the second clutch assembly (14'), in the second position the input shaft (32) is decoupled from the first output (23), and in the third position the input shaft (32) is directly connected to the first output (23) and the sun gear (4).

3. A powertrain according to claim 2, wherein the input shaft (32) is connected to a input shaft gear set (161,162) when the third clutch assembly is in the first position, the input shaft gear set (161,162) is configured to transfer torque between the input shaft (32) and an intermediate shaft (21,21'), the intermediate shaft (21,21') coupled to the gear sets (7,10,8,11) being selectable by the first clutch assembly (14) or to the gear sets (7',10,8',11) being selectable by the second clutch assembly (14').

4. A powertrain according to any of the preceding claims, wherein the first electric motor (1) and the second electric motor (2) comprise a first drive shaft (5') and a second drive shaft (3'), respectively, the first and second drive shafts are parallel to, and positioned on opposite sides of, a centreline (C1) of the carrier (16).

5. A powertrain according to any of the preceding claims, comprising the combustion engine (100), wherein a third drive shaft (25) of the combustion engine is connected to the third input (24).

6. A powertrain according to claims 1 and 5, wherein the third drive shaft (25) is directly connected to the input shaft (32).

7. A powertrain according to claim 5 or 6, wherein the third drive shaft (25), the input shaft (32), the sun gear (4) and the carrier (16) are coaxial.

8. A powertrain according to claim 1, wherein the second output comprises a first gear (150) meshing with a second gear (151) connected to, or forming an integral part of, the ring gear (6).

9. A powertrain according to claim 1 or 8, wherein the transmission assembly comprises a fourth clutch assembly (140) configured to couple the second output (150) and the second electric motor (2) such that torque and rotation is transferred from the second electric motor (2) to the ring gear (6).

10. A powertrain according to any of the preceding claims, comprising a planetary gear clutch (22) for controlling a shift between the first gear state, the second gear state and the third gear state.

11. A powertrain according to claim 1, 8 or 9, wherein a shift between the first gear state, the second gear state and the third gear state is controlled through torque and speed applied to the sun gear (4) through the first output and to the ring gear (6) through the second output.

12. A powertrain according to any of the preceding claims, wherein the first electric motor (1) and the second electric motor (2) are configured to be decoupled from the first output (23) by operating the first clutch assembly (14) and the second clutch assembly (14'), respectively.

13. A powertrain according to any of the preceding claims, wherein the first input (5) is operably connectable to the sun gear (4) via any of a first torque path and a second torque path, and the second input (3) is operably connectable to the sun gear (4) via any of a third torque path and a fourth torque path, the first and third torque path providing a first gear ratio, and the second and fourth torque path providing a second gear ratio.

14. A powertrain according to claim 13, wherein the second input (3) is operably connectable to the ring gear (6) via a fifth torque path.

15. A vehicle comprising a powertrain according to any of the preceding claims.

## Patentansprüche

1. Antriebsstrang, umfassend einen ersten Elektromotor (1), einen zweiten Elektromotor (2), eine Übertragungsanordnung, ein Planetengetriebe (12) und eine Ausgangswelle (120),
wobei
die Übertragungsanordnung einen ersten Eingang (5), der mit dem ersten Elektromotor (1) verbunden ist, einen zweiten Eingang (3), der mit dem zweiten Elektromotor verbunden ist, einen dritten Eingang (24), der mit einem Verbrennungsmotor (100) verbindbar ist, zumindest einen ersten Ausgang (23), an den der erste Elektromotor (1) und der zweite Elektromotor (2) dazu konfiguriert sind, Drehmoment bereitzustellen, und einen zweiten Ausgang (150), der mit dem zweiten Elektromotor (2) verbindbar ist, umfasst, wobei der zweite Ausgang an das Hohlrad (6) gekoppelt ist,
wobei
der erste Eingang (5) mit dem ersten Ausgang (23) durch eine Vielzahl von Getriebesätzen (7, 10, 8, 11), die durch eine erste Kupplungsanordnung (14) auswählbar sind, verbindbar ist und
der zweite Eingang (3) mit dem ersten Ausgang (23) durch eine Vielzahl von Getriebesätzen (7', 10, 8', 11), die durch eine zweite Kupplungsanordnung (14') auswählbar sind, verbindbar ist, um zumindest zwei Getriebeverhältnisse zwischen dem ersten Ausgang (23) und jedem von dem ersten Eingang (5) und dem zweiten Eingang (3) bereitzustellen, wobei die Getriebesätze und Kupplungsanordnungen dazu konfiguriert sind, einen Wechsel zwischen den zwei Getriebeverhältnissen ohne Drehmomentunterbrechung zu ermöglichen; und
das Planetengetriebe (12) ein Sonnenrad (4), ein Hohlrad (6) und einen Träger (16) umfasst, der Träger (16) mit der Ausgangswelle (120) verbunden ist und das Planetengetriebe (12) zwischen einem ersten Getriebezustand, einem zweiten Getriebezustand und einem dritten Getriebezustand schaltbar ist, in dem ersten Getriebezustand das Hohlrad (6) drehfest gehalten wird, um ein höchstmögliches inhärentes Getriebeverhältnis zwischen dem Träger (16) und dem Sonnenrad (4) bereitzustellen, in dem zweiten Getriebezustand eine Drehgeschwindigkeit des Hohlrads (6) von der Drehung von sowohl dem Sonnenrad (4) als auch dem Träger (16) abhängt und in dem dritten Getriebezustand beliebige zwei von dem Hohlrad (6), dem Sonnenrad (4) und dem Träger drehfest miteinander gekoppelt werden, um ein 1:1-Getriebeverhältnis zwischen dem Sonnenrad (4) und dem Träger (16) bereitzustellen;
der erste Ausgang (23) der Übertragungsanordnung an das Sonnenrad (4) gekoppelt ist;
der dritte Eingang (24) eine Eingangswelle (32) umfasst, die an den ersten Ausgang (23) und das Sonnenrad (4) über eine dritte Kupplungsanordnung (160, 160') gekoppelt ist, der dritte Eingang (24) dazu konfiguriert ist, mit dem ersten Eingang (5) durch die dritte Kupplungsanordnung (160) verbunden zu sein, während die erste Kupplungsanordnung (14) in einer mittleren Position ist, sodass der erste Elektromotor (1) in der Lage ist, Drehmoment an den dritten Eingang (24) bereitzustellen, oder der dritte Eingang (24) in der Lage ist, Drehmoment an den ersten Eingang (5) und den ersten Motor (1) bereitzustellen, unabhängig von Drehmoment oder Drehung des zweiten Elektromotors (2) und der Ausgangswelle (120).

2. Antriebsstrang nach Anspruch 1, wobei die dritte Kupplungsanordnung (160) dazu konfiguriert ist, zwischen einer ersten Position, einer zweiten Position und einer dritten Position zu schalten, in der ersten Position die Eingangswelle (32) mit dem ersten Ausgang (23) über einen beliebigen der Getriebesätze (7, 10, 8, 11), die durch die erste Kupplungsanordnung (14) oder die zweite Kupplungsanordnung (14') auswählbar sind, verbunden ist, in der zweiten Position die Eingangswelle (32) von dem ersten Ausgang (23) entkoppelt ist und in der dritten Position die Eingangswelle (32) direkt mit dem ersten Ausgang (23) und dem Sonnenrad (4) verbunden ist.

3. Antriebsstrang nach Anspruch 2, wobei die Eingangswelle (32) mit einem Eingangswellengetriebesatz (161, 162) verbunden ist, wenn die dritte Kupplungsanordnung in der ersten Position ist, der Eingangswellengetriebesatz (161, 162) dazu konfiguriert ist, Drehmoment zwischen der Eingangswelle (32) und einer Zwischenwelle (21, 21') zu übertragen, die Zwischenwelle (21, 21') an die Getriebesätze (7, 10, 8, 11), die durch die erste Kupplungsanordnung (14) auswählbar sind, oder an die Getriebesätze (7', 10, 8', 11), die durch die zweite Kupplungsanordnung (14') auswählbar sind, gekoppelt ist.

4. Antriebsstrang nach einem der vorhergehenden Ansprüche, wobei der erste Elektromotor (1) und der zweite Elektromotor (2) jeweils eine erste Antriebswelle (5') und eine zweite Antriebswelle (3') umfassen, die erste und die zweite Antriebswelle parallel zu und auf gegenüberliegenden Seiten von einer Mittellinie (C1) des Trägers (16) positioniert sind.

5. Antriebsstrang nach einem der vorhergehenden Ansprüche, umfassend das Verbrennungsmotor (100), wobei eine dritte Antriebswelle (25) des Verbrennungsmotors mit dem dritten Eingang (24) verbunden ist.

6. Antriebsstrang nach Anspruch 1 und 5, wobei die dritte Antriebswelle (25) direkt mit der Eingangswelle (32) verbunden ist.

7. Antriebsstrang nach Anspruch 5 oder 6, wobei die dritte Antriebswelle (25), die Eingangswelle (32), das Sonnenrad (4) und der Träger (16) koaxial sind.

8. Antriebsstrang nach Anspruch 1, wobei der zweite Ausgang ein erstes Zahnrad (150) umfasst, das mit einem zweiten Zahnrad (151) kämmt, das mit dem Hohlrad (6) verbunden ist oder einen integralen Teil davon bildet.

9. Antriebsstrang nach Anspruch 1 oder 8, wobei die Übertragungsanordnung eine vierte Kupplungsanordnung (140) umfasst, die dazu konfiguriert ist, den zweiten Ausgang (150) und den zweiten Elektromotor (2) zu koppeln, sodass Drehmoment und Drehung von dem zweiten Elektromotor (2) auf das Hohlrad (6) übertragen werden.

10. Antriebsstrang nach einem der vorhergehenden Ansprüche, umfassend eine Planetengetriebekupplung (22) zum Steuern einer Schaltung zwischen dem ersten Getriebezustand, dem zweiten Getriebezustand und dem dritten Getriebezustand.

11. Antriebsstrang nach Anspruch 1, 8 oder 9, wobei eine Schaltung zwischen dem ersten Getriebezustand, dem zweiten Getriebezustand und dem dritten Getriebezustand durch Drehmoment und Geschwindigkeit gesteuert wird, die auf das Sonnenrad (4) durch den ersten Ausgang und auf das Hohlrad (6) durch den zweiten Ausgang aufgebracht werden.

12. Antriebsstrang nach einem der vorhergehenden Ansprüche, wobei der erste Elektromotor (1) und der zweite Elektromotor (2) dazu konfiguriert sind, von dem ersten Ausgang (23) jeweils durch Betätigen der ersten Kupplungsanordnung (14) und der zweiten Kupplungsanordnung (14') entkoppelt zu werden.

13. Antriebsstrang nach einem der vorhergehenden Ansprüche, wobei der erste Eingang (5) mit dem Sonnenrad (4) über einen beliebigen von einem ersten Drehmomentweg und einem zweiten Drehmomentweg wirkverbindbar ist und der zweite Eingang (3) mit dem Sonnenrad (4) über einen beliebigen von einem dritten Drehmomentweg und einem vierten Drehmomentweg wirkverbindbar ist, der erste und der dritte Drehmomentweg ein erstes Getriebeverhältnis bereitstellen und der zweite und der vierte Drehmomentweg ein zweites Getriebeverhältnis bereitstellen.

14. Antriebsstrang nach Anspruch 13, wobei der zweite Eingang (3) mit dem Hohlrad (6) über einen fünften Drehmomentweg wirkverbindbar ist.

15. Fahrzeug, umfassend einen Antriebsstrang nach einem der vorhergehenden Ansprüche.

## Revendications

1. Groupe motopropulseur comprenant un premier moteur électrique (1), un second moteur électrique (2), un ensemble de transmission, un train planétaire (12) et un arbre de sortie (120),
dans lequel
l'ensemble de transmission comprend une première entrée (5) reliée au premier moteur électrique (1), une deuxième entrée (3) reliée au second moteur électrique, une troisième entrée (24) pouvant être reliée à un moteur à combustion (100), au moins une première sortie (23) à laquelle le premier moteur électrique (1) et le second moteur électrique (2) sont conçus pour fournir un couple, et une deuxième sortie (150) pouvant être reliée au second moteur électrique (2), la deuxième sortie étant couplée à la couronne (6),
dans lequel
la première entrée (5) peut être reliée à la première sortie (23) par une pluralité de trains d'engrenages (7, 10, 8, 11) pouvant être sélectionnés par un premier ensemble d'embrayage (14), et
la deuxième entrée (3) peut être reliée à la première sortie (23) par une pluralité de trains d'engrenages (7', 10, 8', 11) pouvant être sélectionnés par un deuxième ensemble d'embrayage (14'), pour fournir au moins deux rapports de transmission entre la première sortie (23) et chacune de la première entrée (5) et de la deuxième entrée (3), dans lequel les trains d'engrenages et les ensembles d'embrayage sont conçus pour permettre un changement entre les deux rapports de transmission sans interruption de couple ; et
le train planétaire (12) comprend un pignon solaire (4), une couronne (6) et un porte-satellites (16), le porte-satellites (16) est relié à l'arbre de sortie (120) et le train planétaire (12) peut commuter entre un premier état de rapport, un deuxième état de rapport et un troisième état de rapport, dans le premier état de rapport, la couronne (6) est maintenue immobile en rotation pour fournir un rapport de transmission inhérent le plus élevé possible entre le porte-satellites (16) et le pignon solaire (4), dans le deuxième état de rapport, une vitesse de rotation de la couronne (6) dépend de la rotation à la fois du pignon solaire (4) et du porte-satellites (16), et dans le troisième état de rapport, deux éléments quelconques parmi la couronne (6), le pignon solaire (4) et le porte-satellites sont maintenus constants en rotation l'un par rapport à l'autre pour fournir un rapport de transmission de 1:1 entre le pignon solaire (4) et le porte-satellites (16) ; et
la première sortie (23) de l'ensemble de transmission est couplée au pignon solaire (4) ;
la troisième entrée (24) comprend un arbre d'entrée (32) couplé à la première sortie (23) et au pignon solaire (4) via un troisième ensemble d'embrayage (160, 160'), la troisième entrée (24) est configurée pour être reliée à la première entrée (5) par le troisième ensemble d'embrayage (160) tandis que le premier ensemble d'embrayage (14) est dans une position médiane, de telle sorte que le premier moteur électrique (1) puisse fournir un couple à la troisième entrée (24), ou que la troisième entrée (24) puisse fournir un couple à la première entrée (5) et au premier moteur (1), indépendamment du couple ou de la rotation du second moteur électrique (2) et de l'arbre de sortie (120).

2. Groupe motopropulseur selon la revendication 1, dans lequel le troisième ensemble d'embrayage (160) est conçu pour commuter entre une première position, une deuxième position et une troisième position, dans la première position, l'arbre d'entrée (32) est relié à la première sortie (23) via l'un quelconque des trains d'engrenages (7, 10, 8, 11) pouvant être sélectionné par le premier ensemble d'embrayage (14) ou le deuxième ensemble d'embrayage (14'), dans la deuxième position, l'arbre d'entrée (32) est découplé de la première sortie (23), et dans la troisième position, l'arbre d'entrée (32) est directement relié à la première sortie (23) et au pignon solaire (4).

3. Groupe motopropulseur selon la revendication 2, dans lequel l'arbre d'entrée (32) est relié à un ensemble d'engrenages d'arbre d'entrée (161, 162) lorsque le troisième ensemble d'embrayage est dans la première position, l'ensemble d'engrenages d'arbre d'entrée (161, 162) est conçu pour transférer un couple entre l'arbre d'entrée (32) et un arbre intermédiaire (21, 21'), l'arbre intermédiaire (21, 21') couplé aux trains d'engrenages (7, 10, 8, 11) pouvant être sélectionné par le premier ensemble d'embrayage (14) ou aux trains d'engrenages (7', 10, 8', 11) pouvant être sélectionnés par le deuxième ensemble d'embrayage (14').

4. Groupe motopropulseur selon l'une quelconque des revendications précédentes, dans lequel le premier moteur électrique (1) et le second moteur électrique (2) comprennent un premier arbre d'entraînement (5') et un second arbre d'entraînement (3'), respectivement, les premier et second arbres d'entraînement sont parallèles à un axe central (C1) du porte-satellites (16) et positionnés de part et d'autre de celui-ci.

5. Groupe motopropulseur selon l'une quelconque des revendications précédentes, comprenant le moteur à combustion (100), dans lequel un troisième arbre d'entraînement (25) du moteur à combustion est relié à la troisième entrée (24).

6. Groupe motopropulseur selon les revendications 1 et 5, dans lequel le troisième arbre d'entraînement (25) est directement relié à l'arbre d'entrée (32).

7. Groupe motopropulseur selon la revendication 5 ou 6, dans lequel le troisième arbre d'entraînement (25), l'arbre d'entrée (32), le pignon solaire (4) et le porte-satellites (16) sont coaxiaux.

8. Groupe motopropulseur selon la revendication 1, dans lequel la deuxième sortie comprend un premier engrenage (150) s'engrenant avec un deuxième engrenage (151) relié à, ou faisant partie intégrante de, la couronne (6).

9. Groupe motopropulseur selon la revendication 1 ou 8, dans lequel l'ensemble de transmission comprend un quatrième ensemble d'embrayage (140) conçu pour coupler la deuxième sortie (150) et le second moteur électrique (2) de telle sorte qu'un couple et une rotation soient transférés du second moteur électrique (2) à la couronne (6).

10. Groupe motopropulseur selon l'une quelconque des revendications précédentes, comprenant un embrayage à train planétaire (22) destiné à commander un changement entre le premier état de rapport, le deuxième état de rapport et le troisième état de rapport.

11. Groupe motopropulseur selon la revendication 1, 8 ou 9, dans lequel un changement entre le premier état de rapport, le deuxième état de rapport et le troisième état de rapport peut être commandé par un couple et une vitesse appliqués au pignon solaire (4) via la première sortie et à la couronne (6) via la deuxième sortie.

12. Groupe motopropulseur selon l'une quelconque des revendications précédentes, dans lequel le premier moteur électrique (1) et le second moteur électrique (2) sont configurés pour être découplés de la première sortie (23) en actionnant le premier ensemble d'embrayage (14) et le deuxième ensemble d'embrayage (14'), respectivement.

13. Groupe motopropulseur selon l'une quelconque des revendications précédentes, dans lequel la première entrée (5) peut être reliée fonctionnellement au pignon solaire (4) via l'un quelconque d'un premier trajet de couple et d'un deuxième trajet de couple, et la deuxième entrée (3) peut être reliée fonctionnellement au pignon solaire (4) via l'un quelconque d'un troisième trajet de couple et d'un quatrième trajet de couple, les premier et troisième trajets de couple fournissant un premier rapport de transmission, et les deuxième et quatrième trajets de couple fournissant un deuxième rapport de transmission.

14. Groupe motopropulseur selon la revendication 13, dans lequel la deuxième entrée (3) peut être reliée fonctionnellement à la couronne (6) via un cinquième trajet de couple.

15. Véhicule comprenant un groupe motopropulseur selon l'une quelconque des revendications précédentes.
